# EUROPÄISCHE PATENTSCHRIFT

(11) **EP 0 690 278 B1**
(45) Veröffentlichungstag und Bekanntmachung des Hinweises auf die Patenterteilung: **14.04.1999**
(21) Anmeldenummer: 95109600.7
(22) Anmeldetag: 21.06.1995
(51) Int. Cl.: F26B 3/12, B01D 1/18

(54) **Sprühtrockner und Verfahren zum Eintrag von Zuschlagstoffen bei der Sprühtrocknung von wässrigen Dispersionen in Scheibenzerstäubungstrocknern**
Spray dryer and process for charging additives during spray drying of water dispersions in disc spray dryers
Séchoir à pulvérisation et procédé pour l'introduction d'additifs pendant la séchage par pulvérisation de dispersions aqueuses dans les séchoirs à disc à pulvérisation

(30) Priorität: 29.06.1994 DE 4422438
(43) Veröffentlichungstag der Anmeldung: 03.01.1996
(73) Patentinhaber: Clariant GmbH, 65929 Frankfurt am Main (DE)
(72) Erfinder: Hartel, Johannes, D-65812 Bad Soden (DE); Hess, Stefan, Dr., D-64521 Gross-Gerau (DE); Schottler, Michael, D-65474 Bischofsheim (DE)

(56) Entgegenhaltungen:
- DE-A- 1 629 016
- DE-A- 1 933 848
- DE-A- 2 303 626
- DE-B- 1 198 742
- FR-A- 1 211 157
- US-A- 3 963 559
- US-A- 4 369 091
- MUJUMDAR A.S. 'Handbook of Industrial Drying' , MARCEL DEKKER, INC , NEW YORK * Seite 588, Absatz 3; Abbildung 17A *

## Beschreibung

Die vorliegende Erfindung betrifft einen Sprühtrockner mit einer Zerstäuberscheibe und einer Vorrichtung zum Eintrag von Zuschlagstoffen sowie ein Verfahren zum Eintrag von Zuschlagstoffen bei der Sprühtrocknung von wäßrigen Dispersionen in Scheibenzerstäubungstrocknern.

Wäßrige Polymerdispersionen werden in den unterschiedlichsten Anwendungsgebieten eingesetzt. Gemeinsam ist allen diesen Polymerdispersionen, daß sie neben dem Dispersionspolymerisat einen erheblichen Anteil an Wasser enthalten, der während des Herstellverfahrens benötigt wird und auch für die Applizierbarkeit der Dispersion erforderlich ist. Der Wassergehalt der Dispersionen, der üblicherweise 40 bis 80 Gew.-% beträgt, bedingt jedoch einige Nachteile. Naturgemäß wird das Volumen und das Gewicht der zu transportierenden beziehungsweise zu lagernden Menge, bezogen auf das eigentliche Dispersionspolymer, durch den Wasseranteil drastisch erhöht. Darüber hinaus erfordert der Transport und die Lagerung einer flüssigen wäßrigen Dispersion eine aufwendigere Verpackung als ein Feststoff. Wäßrige Polymerdispersionen sind zudem nicht froststabil und weisen eine nicht zu unterschätzende Neigung zum mikrobiellen Befall auf.

Aus diesen Gründen gehen die Bestrebungen dahin, Dispersionspolymerisate für Transport und Lagerung möglichst in Form trockener Pulver zu erhalten, die dann entweder in Wasser redispergiert werden oder in bestimmten Anwendungsbereichen, insbesondere im Baustoffsektor, sogar direkt eingesetzt werden können. Die Entfernung des Wassers aus den Polymerdispersionen erfolgt üblicherweise durch Sprühtrocknung. Dabei kann auf die bekannten Vorrichtungen zum Versprühen, beispielsweise durch Mehrstoffdüsen oder mittels einer Zerstäuberscheibe, in einem gegebenenfalls erhitzten Trockengasstrom zurückgegriffen werden. Durch die gewählten Apparate- und Verfahrensparameter beim Sprühtrocknen kann die mittlere Korngröße und die Korngrößenverteilung des Polymerpulvers beeinflußt werden. Das Sprühtrocknen von Dispersionen von Polymeren mit einer niedrigen Glasübergangstemperatur ist jedoch nicht unproblematisch. Insbesondere die Pulverteilchen von Polymeren mit einer Glasübergangstemperatur unterhalb von 0°C neigen zum Verkleben untereinander (Klumpenbildung) und zum Anbacken an den Apparateteilen. Die trockenen Produkte können dabei sogar die für ihre Weiterverarbeitung erforderliche Rieselfähigkeit verlieren. Darüber hinaus besitzen die durch Sprühtrocknung erhaltenen Pulver von Polymeren mit einer Glasübergangstemperatur unterhalb von 0°C keine ausreichende Lagerstabilität.

Die sprühgetrockneten Pulver insbesondere von Polymeren mit einer Glasübergangstemperatur unterhalb von 0°C lassen sich zur Verbesserung der Rieselfähigkeit und Lagerstabilität daher nachträglich durch Bepuderung mit Antibackmitteln konfektionieren, wie dies beispielsweise in DE-C 17 19 317 beschrieben wird. Das nachträgliche Konfektionieren der Polymerpulver stellt einen zusätzlichen Arbeitsgang dar und erfordert den Einsatz von speziellen Mischaggregaten. Derart nachträglich konfektionierte Produkte neigen außerdem stark zum Stauben.

Um die Neigung des Polymerpulvers zum Verklumpen und Anbacken im Sprühtrockner zu verringern, muß ein Antibackmittel bereits während des Sprühtrocknungsprozesses zugegen sein. Gemäß DE-C 22 22 033 können der Dispersion Füllstoffe vor oder auch während des Sprühtrocknungsprozesses zugesetzt werden. Bei Übertragung dieser Verfahrensweise auf die Zugabe des Antibackmittels würde sich dieses statistisch in den Polymerteilchen verteilen, so daß nur ein Teil des Antibackmittels seine naturgemäß nur an der Oberfläche wirksamen Eigenschaften entfalten kann. Darüber hinaus verursachen die Körner des Antibackmittels eine beschleunigte Abnutzung der Zerstäuberscheibe.

Das Antibackmittel kann gemäß DE-C 31 01 413 beispielsweise über Zweistoffdüsen in der Nähe der Turmdecke eindosiert werden oder auch dem Trockenluftstrom direkt zugesetzt werden, der konstruktionsbedingt ebenfalls in der Turmdecke in den Sprühtrockner eintritt. Dieses Verfahren ist zwar grundsätzlich geeignet, die Rieselfähigkeit der trockenen Polymerpulver zu verbessern, jedoch werden insbesondere bei Polymeren mit einer Glasübergangstemperatur unterhalb von 0 °C noch nicht die gestellten hohen Anforderungen an die Lagerstabilität erfüllt (Vergleichsversuch 1).

Alternativ wird in DE-A 22 14 410 ein Verfahren beschrieben, bei dem die Dispersion und das Antibackmittel jeweils über getrennte Zweistoffdüsen in den Sprühtrockner eindosiert werden und sich die Zweistoffdüse für das Antibackmittel in Wandnähe nur wenig unterhalb der Zweistoffdüse für die Dispersion befindet. Das Einbringen der Dispersion über eine Zweistoffdüse weist gegenüber der Scheibenzerstäubung naturgemäß den Nachteil auf, daß hinsichtlich Viskosität und Feststoffgehalt der Dispersion sowie des errechneten Mengendurchsatzes niedrigere Obergrenzen vorhanden sind. Darüber hinaus führt das beschriebene Verfahren aufgrund der unsymmetrischen Anordnung der beiden Zweistoffdüsen zu einer ungleichmäßigen Verteilung des Antibackmittels bezüglich der Polymerteilchen.

Beim Sprühtrocknen von wasserlöslichen Farbstoffen wird in DE-A 23 03 626 eine Vorrichtung zum Rückführen staubförmiger Farbpartikel vorgestellt, mit der ein pneumatisch geförderter Strom der Farbpartikel sowohl oberhalb als auch unterhalb der Zerstäuberscheibe zugeführt werden kann. Ein unterschiedlicher Einfluß der beiden alternativ angebotenen Eintragspositionen auf die Eigenschaften des erhaltenen Produkts ist der Druckschrift nicht zu entnehmen.

In der DE-B-11 98 742 wird eine Vorrichtung zum Eintrag von Zuschlagstoffen in Scheibenzerstäubungstrockner offenbart, deren Austrittsöffnung symmetrisch unterhalb der Zerstäuberscheibe angeordnet ist. Dabei kann mit einem zentral durch ein Absaugrohr gehenden Rohr mit Preßluft Pulver in den Kern des Wirbels geführt werden.

Die Aufgabe der vorliegenden Erfindung bestand demnach darin, ein Verfahren zum Sprühtrocknen von wäßrigen Polymerdispersionen bereitzustellen, das die Herstellung von trockenen, rieselfähigen und lagerstabilen Pulvern auch von Polymeren mit einer Glasübergangstemperatur unterhalb von 0°C ermöglicht.

Die Lösung dieser Aufgabe ergab sich überraschenderweise durch eine kontinuierliche Eindosierung von Antibackmitteln während des Sprühtrocknens der wäßrigen Polymerdispersion mittels einer Eintragsvorrichtung, die die Form einer Lanze mit einer teleskopartigen Anordnung der Zuführungsrohre besitzt, deren Austrittsöffnung symmetrisch unterhalb der Zerstäuberscheibe in einem Abstand von 2 bis 20 cm angeordnet ist.

Gegenstand der vorliegenden Erfindung ist somit ein Sprühtrockner mit einer Zerstäuberscheibe und einer Vorrichtung zum Eintrag von Zuschlagstoffen, der dadurch gekennzeichnet ist, daß die Eintragsvorrichtung die Form einer Lanze mit einer teleskopartigen Anordnung der Zuführungsrohre besitzt und daß die Austrittsöffnung symmetrisch unterhalb der Zerstäuberscheibe in einem Abstand von 2 bis 20 cm angeordnet ist.

Der Ausdruck "Zerstäuberscheibe" umfaßt nicht nur flache Scheiben sondern auch andere Rotoren, die in der Zentrifugaltrocknertechnik verwendet werden, beispielsweise Scheiben mit einer umgekehrten Schüsselform, Scheiben mit geraden oder gekrümmten Flügeln und Scheiben mit konzentrischen ringförmigen Wandungen, die um den Umfang verteilte Schlitze aufweisen.

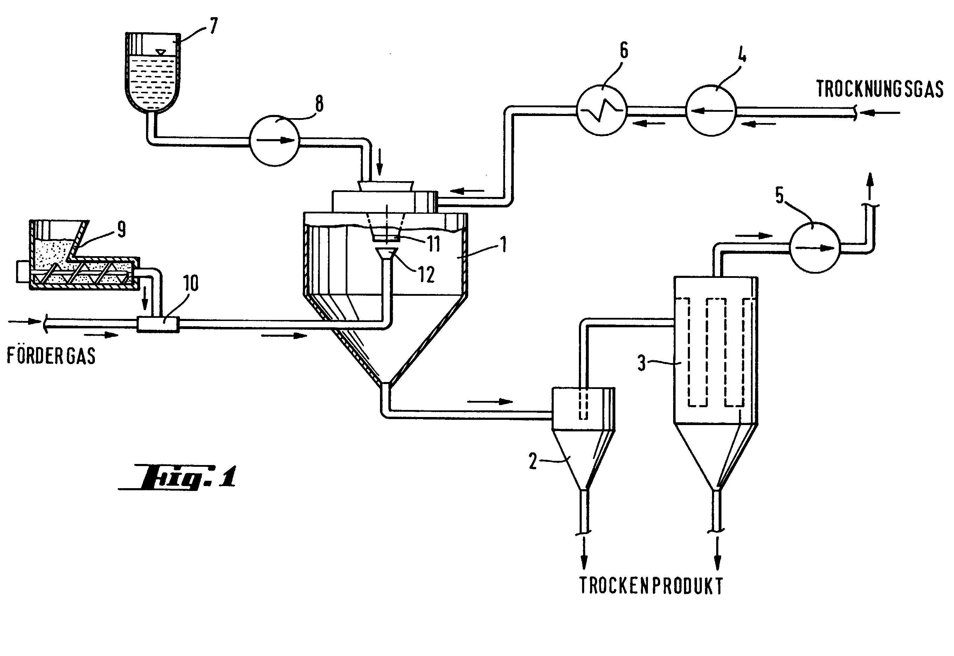

Die Anordnung der Austrittsöffnung der Eintragsvorrichtung symmetrisch unterhalb der Zerstäuberscheibe im Sprühtrockner ist erfindungsgemäß von Bedeutung. Die Ausführung eines Sprühtrockners mit der erfindungsgemäßen Eintragsvorrichtung ist beispielsweise aus FIG. 1 zu ersehen. Darin bedeuten:
- 1: Sprühtrockner
- 2: Zyklon
- 3: Filter
- 4: Zuluftventilator
- 5: Abluftventilator
- 6: Gaserhitzer
- 7: Dispersionsvorlage
- 8: Dosierpumpe
- 9: Dosierschnecke
- 10: Mischdüse
- 11: Zentrifugalzerstäuber
- 12: Eintragsvorrichtung

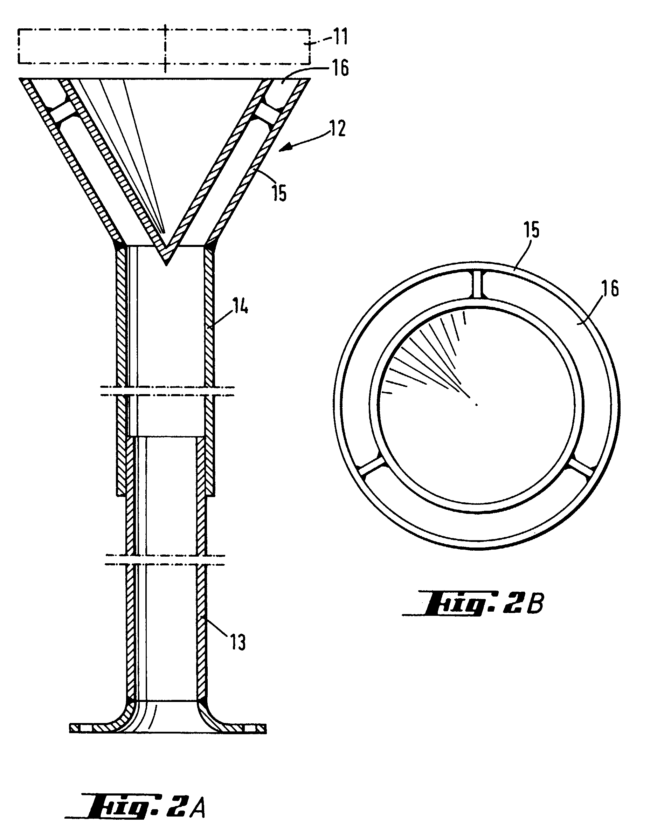

Die Eintragsvorrichtung ist vorzugsweise so ausgeführt, daß sie sich zum pneumatischen Eintragen von Feststoffen eignet. Sie ist dazu in Form einer Lanze ausgeprägt, mit einer teleskopartigen Anordnung der Zuführungsrohre, die beispielsweise die in FIG. 2 dargestellte Form aufweisen kann. Darin bedeuten:
- 13, 14: Rohre
- 15: Austrittsdüse
- 16: Austrittsöffnung

Diese Anordnung ermöglicht es, durch Ausziehen oder Zusammenschieben der Rohre 13 und 14 den Abstand zwischen Austrittsöffnung 16 und Zentrifugalscheibe 11 stufenlos einzustellen.

Dabei stellen 13 und 14 Zuleitungsrohre dar, die in eine kegelförmige Austrittsdüse 15 münden, deren ringförmiger Austrittsspalt 16 vorzugsweise eine lichte Weite von 2 bis 100 mm, insbesondere 5 bis 50 mm aufweist.

Vorzugsweise weist die Austrittsöffnung für das Antibackmittel einen Außendurchmesser der Austrittsöffnung auf, der halb so groß bis doppelt so groß, insbesondere genauso groß, wie der Durchmesser der Zerstäuberscheibe ist.

Die Austrittsöffnung der Eintragsvorrichtung für das Antibackmittel befindet sich in einem Abstand zur Zerstäuberscheibe von 2 bis 20 cm.

Gegenstand der vorliegenden Erfindung ist auch ein Verfahren zum Eintrag von Zuschlagstoffen bei der Sprühtrocknung von wäßrigen Dispersionen in Scheibenzerstäubungstrocknern durch Eindosieren eines Antibackmittels über eine Eintragsvorrichtung, bei dem das Antibackmittel symmetrisch unterhalb der Zerstäuberscheibe des Trockners durch eine Eintragsvorrichtung eindosiert wird, wobei die Eintragsvorrichtung die Form einer Lanze mit einer teleskopartigen Anordnung der Zuführungsrohre besitzt.

Der Eintrag des Antibackmittels erfolgt pneumatisch in Form eines Gas-/Feststoffstroms über die erfindungsgemäße Eintragsvorrichtung. Als Fördergas für den Transport des Antibackmittels wird vorzugsweise dasselbe Gas verwendet, das als Trockengas im Sprühtrockner eingesetzt wird, insbesondere Stickstoff oder Luft. Die Zuführung des Antibackmittels in den Sprühtrockner erfolgt beispielsweise wie in FIG. 1 dargestellt. Dazu wird das Antibackmittel aus der Vorlage über die Förderschnecke 9 in den Fördergasstrom dosiert und über die Eintragsdüse 12 in den Sprühtrockner 1 eingeblasen. Anstelle der Förderschnecke können auch andere Vorrichtungen zum Feststoffeintrag, beispielsweise eine Injektordüse oder eine Zellradschleuse, verwendet werden.

Die Geschwindigkeit des Fördergasstroms beträgt vorzugsweise 5 bis 50 m/s, insbesondere 10 bis 40 m/s.

Die Gaseintrittstemperatur im Sprühtrockner beträgt 50 bis 150°C, vorzugsweise 80 bis 140°C, insbesondere 100 bis 130°C.

Das Antibackmittel wird während des Sprühtrocknungsprozesses kontinuierlich in einer Menge von 0,1 bis 50 Gew.-%, vorzugsweise 0,2 bis 25 Gew.-%, insbesondere 0,5 bis 15 Gew.-%, bezogen auf das Polymer, zugeführt.

Der Anteil des Antibackmittels, der über die erfindungsgemäße Eintragsvorrichtung kontinuierlich zudosiert wird, beträgt mindestens 10%, vorzugsweise mehr als 50%, insbesondere 100%, der insgesamt zugeführten Menge des Antibackmittels.

Neben dem Antibackmittel können während des Sprühtrocknens weitere Zusatzstoffe über die erfindungsgemäße Eintragsvorrichtung zugeführt werden, beispielsweise feste Entschäumer, Entstaubungsmittel oder andere feste Modifizierungsmittel.

Der Eintrag der wäßrigen Dispersion in den Sprühtrockner erfolgt in üblicher Weise, beispielsweise wie in FIG 1 dargestellt, durch Fördern der Dispersion mittels Pumpen 8 aus einem Vorratsgefäß 7 in die Zerstäuberscheibe 11. Die wäßrige Polymerdispersion wird im Sprühtrockner 1 getrocknet, indem mittels des Gebläses 4 ein Gasstrom, vorzugsweise Stickstoff oder Luft, über den Gaserhitzer 6 in den Trockner 1 eingeführt wird. Die Strömungsgeschwindigkeit des Trocknungsstroms beträgt vorzugsweise 0,1 bis 20 m/s, insbesondere 5 bis 10 m/s. Die Eintrittstemperatur wird vorzugsweise auf 90 bis 160 °C, insbesondere 110 bis 130 °C eingestellt.

Das getrocknete Polymerpulver wird aus dem Sprühtrockner 1 mit dem Gasstrom in den Zyklon 2 gefördert und dort weitgehend abgeschieden. Der Gasstrom wird mittels des Abluftventilators 5 über den Filter 3 gefördert.

Durch die Anordnung der erfindungsgemäßen Eintragsvorrichtung symmetrisch unterhalb der Zerstäuberscheibe entsteht vermutlich ein intensiver Kontakt zwischen dem Antibackmittel und den an der Oberfläche noch feuchten und damit klebrigen Partikeln, so daß das Antibackmittel überwiegend gleichmäßig auf der Oberfläche der Polymerteilchen abgeschieden wird.

Mittels des erfindungsgemäßen Verfahrens können wäßrige Polymerdispersionen vorteilhaft zu Polymerpulvern sprühgetrocknet werden. Dazu zählen auch Dispersionen, die Polymere mit einer Glasübergangstemperatur unterhalb von 0°C, vorzugsweise unterhalb von -10°C, insbesondere unterhalb von -20°C, enthalten.

Beispiele für zum Trocknen nach dem erfindungsgemäßen Verfahren geeignete Polymerdispersionen sind Dispersionen von homo- und copolymeren Vinylestern, vorzugsweise Ethylen-Vinylacetat-Copolymeren sowie (Meth)Acrylsäureestern, Styrol-/(M eth)Acrylsäureester-Copolymeren.

Mittels des erfindungsgemäßen Verfahrens werden auch von Polymeren mit einer Glasübergangstemperatur unterhalb von 0°C trockene Polymerpulver erhalten, die rieselfähig sind und eine geringe Neigung zur Bildung von Wandbelägen im Sprühtrockner aufweisen. Die Lagerstabilität der erhaltenen Polymerpulver erfüllt die notwendigen Anforderungen, ohne daß eine nachträgliche Konfektionierung erforderlich wäre. Im Gegensatz zu nachträglich konfektionierten Polymerpulvern wird bei den unter Einsatz des erfindungsgemäßen Verfahrens erhaltenen Produkten keine erhöhte Neigung zum Stauben beobachtet.

Die Versuche werden in einem Scheibenzerstäubungstrockner (Hersteller Firma Niro) durchgeführt. Der Trockner wird vor den Tests mit der erfindungsgemäßen Eintragsvorrichtung ausgerüstet. Danach erfolgt das Eindosieren des Zuschlagstoffs pneumatisch über eine symmetrisch unterhalb der Zerstäuberscheibe positionierte Düse. Die eingestellten Versuchsparameter sowie die erzielten Ergebnisse zeigt Tabelle 1. Als Antibackmittel wird ein Kaolin-Derivat (®China Clay-Typ) eingesetzt.

Der Antibackmittelzusatz wird zu 11 Gew.-%, bezogen auf das gesamte anfallende Trockenprodukt, eingestellt.

Die Versuche werden unter annähernd konstanten Trocknungsbedingungen durchgeführt. Die Gaseintrittstemperaturen betragen 110°C beziehungsweise 120 °C, die Gasaustrittstemperatur ca. 75 °C, die Zerstäuberscheibendrehzahl 23000 min⁻¹. Die Trocknungsprodukte fallen mit Restfeuchten <1 Gew.-% an.

Im Vergleichsversuch 1 erfolgt in Anlehnung an die Trocknung nach dem Stand der Technik die Antibackmittelzugabe oberhalb der Zerstäuberscheibe über das Trocknungsgas. Der Abstand des Deckenluftverteilers zur Zerstäuberscheibe beträgt 23 cm. Die Gasaustrittsgeschwindigkeit am Luftverteiler beträgt 4,5 m/s,

In den Vergleichsversuchen 2-5 sowie in den Versuchen 6-10 wird das Antibackmittel über eine Lanze gemäß FIG. 2 pneumatisch zugeführt.

In den Vergleichsversuchen 2, 3 und 4 beträgt der Abstand zwischen der Austrittsöffnung der Lanze und der Zerstäuberscheibe 50, 70, bzw. 90 cm. Die Strömungsgeschwindigkeit des Fördergases beträgt 20 m/s, bzw. 40 m/s.

Im Vergleichsversuch 5 wird das Antibackmittel jeweils zur Hälfte über das Trocknungsgas und die Lanze zudosiert. Der Abstand der Austrittsöffnung der Lanze zur Zerstäuberscheibe beträgt 50 cm. Die Strömungsgeschwindigkeit des Fördergases beträgt 20 m/s.

In den Versuchen 6 bis 10 beträgt der Abstand zwischen der Austrittsöffnung der Lanze und der Zerstäuberscheibe 2 cm, 5 cm und 10 cm. Die Strömungsgeschwindigkeit des Fördergases beträgt 14 m/s, 20 m/s und 40 m/s.

Die in den nachfolgenden Beispielen aufgeführten Teile und Prozente beziehen sich auf das Gewicht, soweit nicht anders vermerkt.

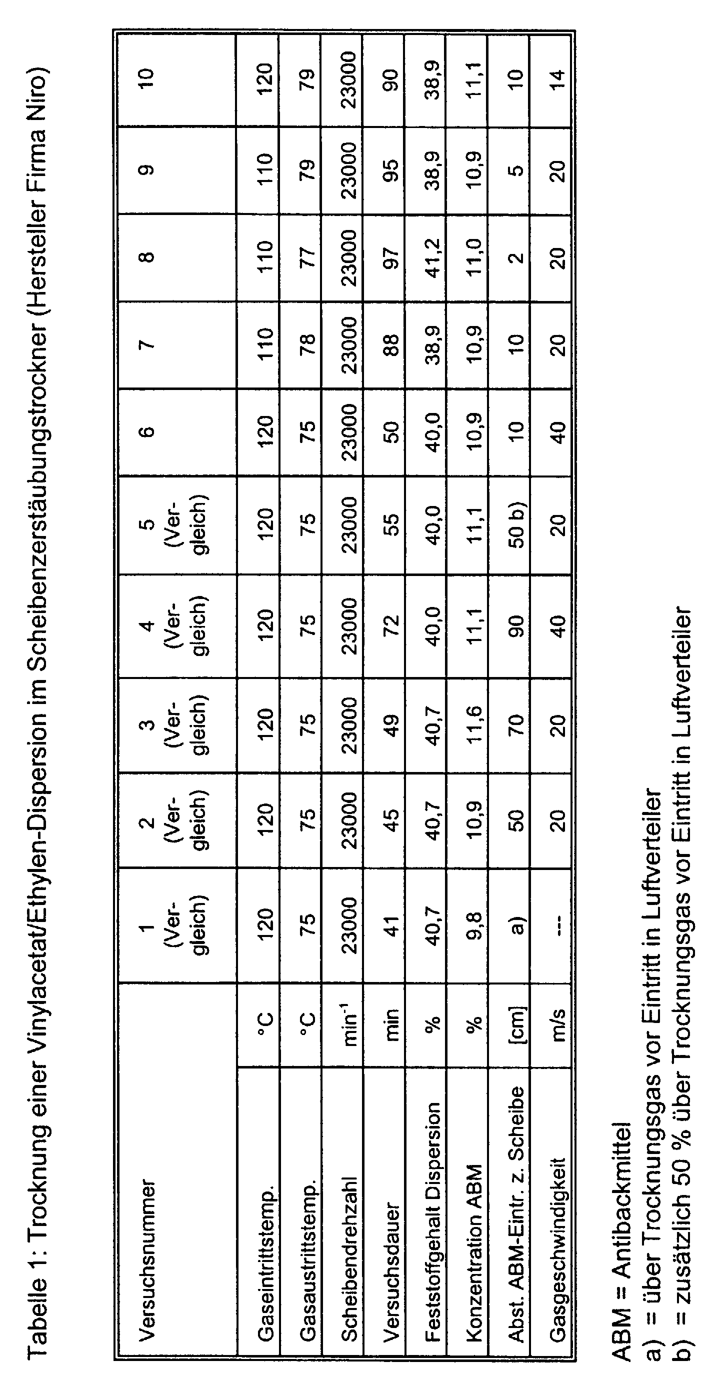

**Tabelle 2**

| Versuche 1-10 | | | | | |
|---|---|---|---|---|---|
| Versuch^{a)} | Asche^{b)} [%] Z/WB | Rieselfähigkeit^{c)} Z/WB | Mengenverhältnis^{d)} Z/WB | Lagerstabilität^{e)} Z/WB | RAS-Test^{f)} Z/WB [mm] |
| 1 (Vergleich) | 13, 6/5,4 | +/+ | 90/10 | 4/5 | 13, 22, 31, 42/18, 27, 37, 46 |
| 2 (Vergleich) | 8,7/5,1 | +/+ | 85/15 | 5/3 | 3, 7, 14, 31/17, 23, 38, 50 |
| 3 (Vergleich) | 8,4/4,2 | +/+ | 79/21 | 5/3 | 12, 24, 34, 45/19, 26, 34, 40 |
| 4 (Vergleich) | 8,4/8,8 | +/+ | 95/5 | 5/5 | 6, 13, 25, 44/10, 20, 34, 52 |
| 5 (Vergleich) | 9,6/11,5 | +/+ | 94/6 | 3/4 | 3, 8, 18, 38/7, 16, 27, 40 |
| 6 | 8,8/9,6 | +/+ | 94/6 | 5/5 | 3, 7, 17, 37/4, 9, 15, 38 |
| 7 | 9,6/7,9 | +/+ | 85/15 | 3/2 | 14, 24, 36, 49/11, 21, 33, 44 |
| 8 | 7,6/13,6 | +/+ | 97/3 | 2/2 | 7, 13, 25, 45/7, 16, 29, 50 |
| 9 | 6,3/8,8 | +/+ | 93/7 | 2/2 | 8, 14, 27, 47/2, 4, 10, 20 |
| 10 | 7,5/11,3 | +/+ | 95/5 | 2/2 | 3, 7, 18, 35/8, 14, 29, 44 |

| | | | | | |
|---|---|---|---|---|---|
| ^{a)} Pulver aus Vinylacetat-Ethylen-Dispersion | | | | | |
| ^{b)} Bestimmungen bei 1000°C durchgeführt (Z: Zyklon; WB: Wandbelag) | | | | | |
| ^{c)} Angabe + : Pulver rieselfähig Angabe - : Pulver nicht rieselfähig (Klumpenbildung) | | | | | |
| ^{d)} Auswaage nach dem Siebvorgang (1-mm-Sieb) | | | | | |
| ^{e)} LS: Lagerstabilität der Zyklonprodukte (24 h bei 50 °C, Gewicht: 200 g/cm²); 1 = sehr gut, 5 = mangelhaft | | | | | |
| ^{f)} Röhrenabsitztest: Angabe der Sedimenthöhe bei Verwendung einer 0,5%igen Redispersion (Werte nach 1h/ 2h/ 4h/ 24h) | | | | | |

## Patentansprüche

1. Sprühtrockner mit einer Zerstäuberscheibe und einer Vorrichtung zum Eintrag von Zuschlagstoffen, dadurch gekennzeichnet, daß die Eintragsvorrichtung die Form einer Lanze mit einer teleskopartigen Anordnung der Zuführungsrohre besitzt und daß die Austrittsöffnung symmetrisch unterhalb der Zerstäuberscheibe in einem Abstand von 2 bis 20 cm angeordnet ist.

2. Vorrichtung nach Anspruch 1, dadurch gekennzeichnet, daß der Austrittsspalt ringförmig ist und eine lichte Weite von 5-50 mm aufweist.

3. Vorrichtung nach Anspruch 1, dadurch gekennzeichnet, daß die Austrittsöffnung den gleichen Außendurchmesser wie die Zerstäuberscheibe aufweist.

4. Verfahren zum Eintrag von Zuschlagstoffen bei der Sprühtrocknung von wäßrigen Dispersionen in Scheibenzerstäubungstrocknern durch Eindosieren eines Antibackmittels über eine Eintragsvorrichtung, bei dem das Antibackmittel symmetrisch unterhalb der Zerstäuberscheibe des Trockners durch eine Eintragsvorrichtung eindosiert wird und die Eintragsvorrichtung die Form einer Lanze mit einer teleskopartigen Anordnung der Zuführungsrohre besitzt.

5. Verfahren nach Anspruch 4, dadurch gekennzeichnet, daß der Eintrag des Antibackmittels pneumatisch mittels eines Fördergasstroms von 10 bis 40 m/s aus Stickstoff oder Luft erfolgt.

6. Verfahren nach Anspruch 4, dadurch gekennzeichnet, daß das Antibackmittel kontinuierlich während des Sprühtrocknungsprozesses in einer Menge von 0,2 bis 25 Gew.-%, bezogen auf das Polymer, zugeführt wird.

7. Verfahren nach Anspruch 4, dadurch gekennzeichnet, daß der Anteil des Antibackmittels, der über die Eintragsvorrichtung zugeführt wird, mehr als 50 % der insgesamt zugeführten Menge des Antibackmittels beträgt.

8. Verfahren nach Anspruch 4, dadurch gekennzeichnet, daß die zu trocknende wäßrige Dispersion Polymere mit einer Glasübergangstemperatur unterhalb von 0°C enthält.

## Claims

1. A spray-drier having an atomizer disk and an apparatus for introducing additives, wherein the feed apparatus has the shape of a lance having a telescopic arrangement of the feed tubes and wherein the outlet orifice is arranged symmetrically beneath the atomizer disk at a distance of 2 to 20 cm.

2. The apparatus as claimed in claim 1, wherein the outlet gap is annular and has an open width of 5-50 mm.

3. The apparatus as claimed in claim 1, wherein the outlet orifice has the same outer diameter as the atomizer disk.

4. A process for introducing additives in the spray-drying of aqueous dispersions in rotary disk atomization driers by feeding an anticaking agent via a feed apparatus, in which process the anticaking agent is fed through a feed apparatus symmetrically beneath the atomizer disk of the drier and the feed apparatus has the shape of a lance having a telescopic arrangement of the feed tubes.

5. The process as claimed in claim 4, wherein the anticaking agent is introduced pneumatically by means of a conveying gas stream of 10 to 40 m/s composed of nitrogen or air.

6. The process as claimed in claim 4, wherein the anticaking agent is fed continuously during the spray-drying process in an amount of 0.2 to 25% by weight, based on the polymer.

7. The process as claimed in claim 4, wherein the proportion of the anticaking agent which is fed via the feed apparatus is more than 50% of the amount of the anticaking agent fed in total.

8. The process as claimed in claim 4, wherein the aqueous dispersion to be dried contains polymers having a glass transition temperature below 0°C.

## Revendications

1. Séchoir à pulvérisation avec un disque de pulvérisateur et un dispositif pour l'introduction d'additifs, caractérisé en ce que le dispositif d'introduction possède la forme d'une lance avec une configuration de type télescopique du tuyau d'alimentation et en ce que l'orifice de sortie est disposé symétriquement au dessous du disque de pulvérisation, à une distance de 2 à 20 cm.

2. Dispositif selon la revendication 1, caractérisé en ce que la fente de sortie est circulaire et présente un diamètre intérieur de 5-50 mm.

3. Dispositif selon la revendication 1, caractérisé en ce que l'orifice de sortie présente le même diamètre extérieur que le disque de pulvérisateur.

4. Procédé pour l'introduction d'additifs lors du séchage par pulvérisation de dispersions aqueuses dans des séchoirs à pulvérisation à disque, par introduction dosée d'un agent anti-agglutination par l'intermédiaire d'un dispositif d'introduction, dans lequel l'agent anti-agglutination est introduit de façon dosée au moyen d'un dispositif d'introduction, symétriquement au-dessous du disque de pulvérisateur du séchoir et en ce que le dispositif d'introduction possède la forme d'une lance avec une configuration de type télescopique du tuyau d'alimentation.

5. Procédé selon la revendication 4, caractérisé en ce que l'introduction de l'agent anti-agglutination a lieu de façon pneumatique au moyen d'un courant de gaz transporteur de 10 à 40 m/s, constitué d'azote ou d'air.

6. Procédé selon la revendication 4, caractérisé en ce que l'agent anti-agglutination est apporté en continu pendant le processus de séchage par pulvérisation, en une quantité de 0,2 à 25 % en poids par rapport au polymère.

7. Procédé selon la revendication 4, caractérisé en ce que la proportion de l'agent anti-agglutination qui est apportée par l'intermédiaire du dispositif d'introduction représente plus de 50 % de la quantité totale de l'agent anti-agglutination apportée.

8. Procédé selon la revendication 4, caractérisé en ce que la dispersion aqueuse à sécher contient des polymères ayant une température de transition vitreuse inférieure à 0°C.
